(19) Europäisches Patentamt / European Patent Office / Office européen des brevets

(11) **EP 3 978 934 B1**

(12) **FASCICULE DE BREVET EUROPEEN**

(45) Date de publication et mention de la délivrance du brevet:
**08.11.2023 Bulletin 2023/45**

(21) Numéro de dépôt: **21197329.2**

(22) Date de dépôt: **17.09.2021**

(51) Classification Internationale des Brevets (IPC):
**G01P 5/26** *(2006.01)*    **G01S 17/58** *(2006.01)*
**F03D 7/04** *(2006.01)*    **F03D 17/00** *(2016.01)*

(52) Classification Coopérative des Brevets (CPC):
**G01P 5/26; F03D 17/00; G01S 17/58; G01S 17/95;**
F05B 2260/84; F05B 2270/8042; Y02A 90/10;
Y02E 10/72

(54) **PROCEDE DE DETERMINATION DE LA VITESSE MOYENNE DU VENT AU MOYEN D'UN CAPTEUR DE TELEDETECTION PAR LASER**

VERFAHREN ZUR BESTIMMUNG DER DURCHSCHNITTLICHEN WINDGESCHWINDIGKEIT MITHILFE EINES LASER-FERNERKENNUNGSSENSORS

METHOD FOR DETERMINING THE AVERAGE SPEED OF THE WIND BY MEANS OF A LASER REMOTE DETECTION SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2020 FR 2010050**

(43) Date de publication de la demande:
**06.04.2022 Bulletin 2022/14**

(73) Titulaire: **IFP Energies nouvelles**
**92500 Rueil-Malmaison (FR)**

(72) Inventeurs:
- **NGUYEN, Hoai-Nam**
  **92852 RUEIL-MALMAISON CEDEX (FR)**
- **GUILLEMIN, Fabrice**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 581 761    FR-A1- 3 068 139
US-A1- 2015 145 253    US-A1- 2020 301 020

- P. TOWERS ET AL: "Real-time wind field reconstruction from LiDAR measurements using a dynamic wind model and state estimation : LiDAR wind field estimation", WIND ENERGY, vol. 19, no. 1, 21 novembre 2014 (2014-11-21), pages 133-150, XP055451329, GB ISSN: 1095-4244, DOI: 10.1002/we.1824
- DAVID SCHLIPF ET AL: "Field Testing of Feedforward Collective Pitch Control on the CART2 Using a Nacelle-Based Lidar Scanner", JOURNAL OF PHYSICS: CONFERENCE SERIES, INSTITUTE OF PHYSICS PUBLISHING, BRISTOL, GB, vol. 555, no. 1, 16 décembre 2014 (2014-12-16), page 12090, XP020275726, ISSN: 1742-6596, DOI: 10.1088/1742-6596/555/1/012090 [extrait le 2014-12-16]

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention concerne le domaine des énergies renouvelables et concerne plus particulièrement la mesure de la ressource des éoliennes, le vent, dans des objectifs de prédiction du vent, de contrôle (orientation, régulation de couple et de vitesse) et/ou de diagnostic et/ou de surveillance de l'éolienne.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) qui convertit l'énergie recueillie en énergie électrique. Le rotor est potentiellement doté de systèmes de contrôle tels que des pales à angle variable ou des freins aérodynamiques ;

- éventuellement une transmission, composée notamment de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone.

Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il n'est pas nécessaire de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

**Technique antérieure**

Pour optimiser le contrôle, il est important de connaître la vitesse moyenne du vent. Pour cela, différentes techniques ont été mises au point.

Selon une première technique, l'utilisation d'un anémomètre permet d'estimer une vitesse du vent en un point, mais cette technologie imprécise ne permet pas de mesurer l'ensemble d'un champ de vent ou de connaître les composantes tridimensionnelles de la vitesse du vent.

Selon une deuxième technique, on peut utiliser un capteur LiDAR (acronyme de l'expression en langue anglaise « light détection and ranging » pouvant être traduite par télédétection par Laser). Le LiDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LiDAR utilise de la lumière visible ou infrarouge au lieu d'ondes radio. La distance à un objet ou à une surface est donnée par la mesure du délai entre l'impulsion et la détection du signal réfléchi.

Dans le domaine des éoliennes, le capteur LiDAR est annoncé comme étant un capteur indispensable au bon fonctionnement des grandes éoliennes, tout particulièrement alors que leur taille et leur puissance augmentent (aujourd'hui, 5 MW, bientôt 15 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur peut être positionné au sol et orienté verticalement (profiler), ce qui permet de mesurer la vitesse de vent et sa direction, ainsi que le gradient de vent selon les altitudes. Cette application est tout particulièrement critique puisqu'elle permet de connaître la ressource productrice d'énergie. Ceci est important pour les projets éoliens, puisque cela conditionne la fiabilité financière du projet.

Une seconde application est le placement de ce capteur sur la nacelle de l'éolienne, pour mesurer le champ de vent en avant de l'éolienne en étant orienté quasiment horizontalement. A priori, la mesure du champ de vent à l'avant de l'éolienne permet de connaître à l'avance la turbulence que va rencontrer l'éolienne quelques instants plus tard. Toutefois, les techniques actuelles de contrôle et de surveillance d'une éolienne ne permettent pas de prendre en compte une mesure réalisée par un capteur LiDAR en estimant précisément la vitesse moyenne du vent, c'est-à-dire dans le plan du rotor. Une telle application est décrite notamment dans la demande de brevet FR 3013777 (US 2015145253).

En outre, une spécificité de l'utilisation du capteur LiDAR est que les distances des plans de mesure par rapport au plan du rotor de l'éolienne peuvent être imposées par l'utilisateur du LiDAR, peuvent être différentes d'un capteur LiDAR à l'autre, et peuvent être inconnues. Dans ce cas, il n'est pas possible d'utiliser des procédés de détermination de la vitesse du vent tels que décrits dans les demandes de brevet FR3068139 (US 2020/0124026), FR3088971 (US 2020/0166650), qui nécessitent d'imposer la distance des plans de mesure par rapport au plan du rotor de l'éolienne.

La demande de brevet EP2581761 décrit une estimation de propriétés du vent à partir d'un LIDAR.

La demande de brevet US2020/301020 décrit une méthode de prédiction de la vitesse du vent dans le plan du rotor pour une éolienne équipée avec un capteur LIDAR.

Le document : P. TOWERS et al. : « Real-time wind field reconstruction from LIDAR measurements using a dynamic wind model and state estimation : LIDAR wind field estimation", Wind Energy, vol. 19, no. 1, 21 novembre 2014, pages 133-150 » décrit une méthode de reconstruction du champ de vent à partir de mesures LIDAR.

**Résumé de l'invention**

La présente invention a pour but de déterminer la vitesse moyenne du vent dans un plan vertical au moyen d'un capteur LiDAR, pour lequel on n'impose pas la distance des plans de mesure par rapport au plan du rotor de l'éolienne, ce qui permet à l'utilisateur du capteur LiDAR de paramétrer librement le capteur LiDAR. Dans ce but, la présente invention concerne un procédé de détermination de la vitesse moyenne du vent dans un plan vertical au moyen d'un capteur LiDAR, dans lequel on réalise des mesures, on construit un modèle des mesures et un modèle du vent, puis, on met en oeuvre un filtre de Kalman adaptatif pour déterminer la vitesse du vent, et on détermine la vitesse moyenne du vent dans le plan vertical considéré. Ces étapes ne nécessitent pas de contrainte a priori des plans de mesure du capteur LiDAR. Ainsi, le procédé selon l'invention peut être utilisé pour toute configuration de capteur LiDAR. Le modèle du vent permet une représentation précise de la vitesse du vent, tout en étant indépendant des distances des plans de mesure du capteur LiDAR.

La présente invention est définie par les revendications indépendantes, et des modes de réalisation avantageux sont décrits dans les revendications dépendantes.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé de détermination de la vitesse moyenne du vent selon un mode de réalisation de l'invention.

La figure 2 illustre une éolienne équipée d'un capteur LiDAR selon un mode de réalisation de l'invention.

La figure 3 illustre, pour un premier exemple, la comparaison de la vitesse moyenne du vent à 100 m du rotor d'une éolienne obtenue avec le procédé selon un mode de réalisation de l'invention par rapport à la vitesse moyenne du vent de référence.

La figure 4 illustre, pour un deuxième exemple, la comparaison de la vitesse moyenne du vent à 110m du rotor d'une éolienne obtenue avec le procédé selon un mode de réalisation de l'invention par rapport à la vitesse moyenne

# EP 3 978 934 B1

du vent de référence.

## Description des modes de réalisation

La présente invention concerne un procédé de détermination de la vitesse moyenne du vent dans un plan vertical, au moyen d'un capteur LiDAR agencé sur une éolienne.

Selon l'invention, le capteur LiDAR permet de mesurer la vitesse du vent sur au moins un plan de mesure en amont de l'éolienne. Il existe plusieurs types de capteur LiDAR, par exemple les capteurs LiDAR scannés, LiDAR continus ou LiDAR pulsés. Dans le cadre de l'invention, on utilise de préférence un LiDAR pulsé. Cependant, les autres technologies de LiDAR peuvent être utilisées tout en restant dans le cadre de l'invention.

Le capteur LiDAR permet une mesure rapide. Par conséquent, l'utilisation d'un tel capteur, permet une détermination rapide en continu de la vitesse moyenne du vent. Par exemple, le taux d'échantillonnage du capteur LiDAR peut être compris entre 1 et 5Hz (voire plus dans le futur), et peut valoir 4 Hz. De plus, le capteur LiDAR permet d'obtenir des informations relatives au vent en amont de l'éolienne, ces informations sont liées au vent qui va arriver sur l'éolienne. Par conséquent, le capteur LiDAR peut être utilisé pour la prédiction de la vitesse du vent dans le plan du rotor de l'éolienne.

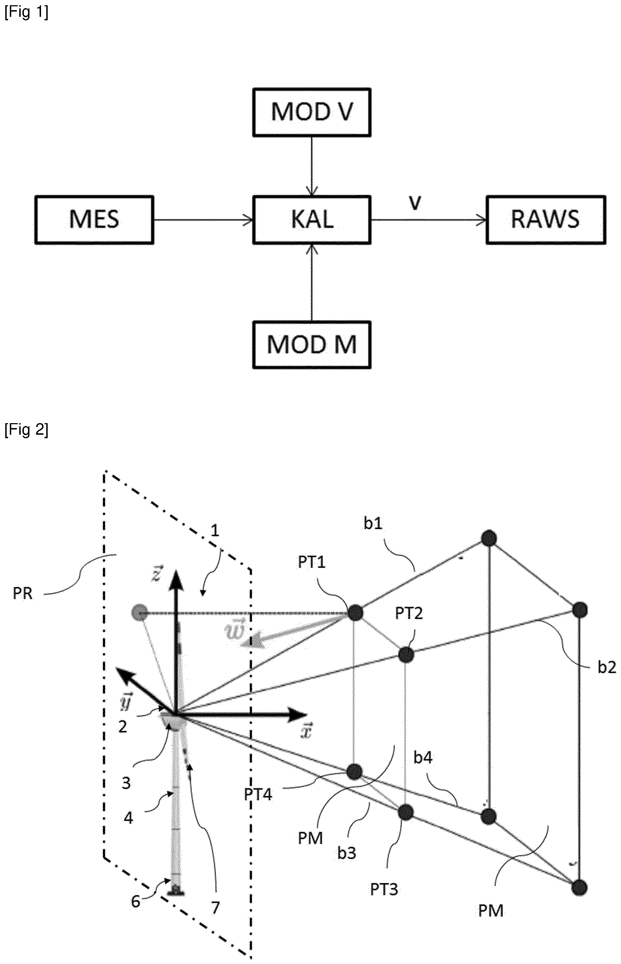

La figure 2 représente, de manière schématique et non limitative, une éolienne 1 à axe horizontal équipée d'un capteur LiDAR 2 pour le procédé selon un mode de réalisation de l'invention. Le capteur LiDAR 2 est utilisé pour mesurer la vitesse du vent à une distance donnée sur une pluralité de plans de mesure PM (seulement deux plans de mesure sont représentés). La connaissance en avance de la mesure de vent permet a priori de donner beaucoup d'informations. Sur cette figure, sont représentés également les axes x, y et z. Le point de référence de ce repère est le centre du rotor. La direction x est la direction longitudinale, correspondant à la direction de l'axe du rotor, en amont de l'éolienne, cette direction correspond aussi à la direction de mesure du capteur LiDAR 2. La direction y, perpendiculaire à la direction x, est la direction latérale ou transversale située dans un plan horizontal (les directions x, y forment un plan horizontal). La direction z est la direction verticale (correspondant sensiblement à la direction du mât 4) dirigée vers le haut, l'axe z est perpendiculaire aux axes x et y. Le plan du rotor est indiqué par le rectangle en traits pointillés PR, il est défini par les directions y, z pour une valeur de x nul. Les plans de mesure PM sont des plans formés par les directions y, z à une distance du plan du rotor PR (pour une valeur de x non nulle). Les plans de mesure PM sont parallèles au plan du rotor PR.

Classiquement, une éolienne 1 permet de transformer l'énergie cinétique du vent en énergie électrique ou mécanique. Pour la conversion du vent en énergie électrique, elle se compose des éléments suivants :

un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;

une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boîte de vitesse et d'arbre mécanique) à une machine électrique (générateur électrique...) (non représentés) qui convertit l'énergie recueillie en énergie électrique. Le rotor est potentiellement doté de systèmes de contrôle tels que des pales à angle variable ou des freins aérodynamiques ;

éventuellement une transmission, composée de deux axes (arbre mécanique du rotor et arbre mécanique de la machine électrique) reliés par une transmission (boite de vitesse) (non représentés).

Comme visible à la figure 2, qui est un exemple de réalisation d'un capteur LiDAR pulsé, le capteur LiDAR 2 utilisé comporte quatre faisceaux ou axes de mesures (b1, b2, b3, b4). De manière non limitative, le procédé selon l'invention fonctionne également avec un capteur LiDAR comportant un nombre quelconque de faisceaux. Le capteur LiDAR réalise une mesure ponctuelle en chaque point d'intersection d'un plan de mesure PM et d'un faisceau (b1, b2, b3, b4). Ces points de mesure sont représentés par des cercles noirs sur la figure 2, pour le premier plan de mesure PM, les points de mesure sur notés PT1, PT2, PT3 et PT4. Le traitement des mesures en ces points de mesure permet de déterminer la vitesse du vent dans les plans de mesure PM.

De préférence, le capteur LIDAR 2 peut être monté sur la nacelle 3 de l'éolienne 1 ou dans le nez de l'éolienne 1 (c'est à l'extrémité avant de la nacelle dans la direction du vent).

Selon l'invention, le procédé de détermination de la vitesse moyenne du vent comporte les étapes suivantes :

1) Construction d'un modèle des mesures du capteur LiDAR

2) Construction d'un modèle du vent

3) Mesure du vent

4) Détermination de la vitesse du vent

5) Détermination de la vitesse moyenne du vent

Les étapes 3), 4) et 5) sont réalisées en temps réel. Les étapes 1) et 2) peuvent être réalisées hors ligne et préalablement aux étapes en temps réel, et peuvent être réalisées dans cet ordre, dans l'ordre inverse ou simultanément. Toutes les étapes seront détaillées dans la suite de la description.

La figure 1 illustre, schématiquement et de manière non limitative, les étapes du procédé selon un mode de réalisation de l'invention. Le procédé permet de déterminer la vitesse moyenne du vent dans un plan vertical au moyen d'un capteur LiDAR placé sur une éolienne. Dans un premier temps, on peut construire hors ligne un modèle du vent MOD V, et un modèle des mesures MOD M. Puis, en temps réel, on mesure MES l'amplitude et la direction du vent au moyen du capteur LiDAR. Ensuite, en temps réel, on détermine la vitesse du vent v en différents points au moyen d'un filtre de Kalman adaptatif KAL, qui utilise le modèle du vent MOD V, le modèle des mesures MOD M et les mesures MES. Enfin, on détermine la vitesse moyenne du vent RAWS à partir de la vitesse du vent v en différents points.

## 1) Construction d'un modèle des mesures du capteur LiDAR

Lors de cette étape, on construit un modèle des mesures du capteur LiDAR. Il s'agit d'un modèle qui relie les composantes de la vitesse du vent au signal de mesure issu du capteur LiDAR.

Selon un mode de réalisation de l'invention, le modèle des mesures du capteur LiDAR peut s'écrire : $m_{j,x}(k) = a_j v_{j,x}(k) + b_j v_{j,y}(k) + c_j v_{j,z}(k)$ avec m la mesure, x la direction longitudinale, j un faisceau de mesure dudit capteur LiDAR, $m_{j,x}$ la mesure sur le faisceau de mesure j à la distance x, k le temps discret, v la vitesse du vent, $v_{j,x}$ la composante longitudinale la vitesse du vent pour le faisceau de mesure j, $v_{j,y}$ la composante transversale la vitesse du vent pour le faisceau de mesure j, $v_{j,z}$ la composante verticale de la vitesse du vent pour le faisceau de mesure j, $a_j$, $b_j$, $c_j$ des coefficients de mesure constants pour le faisceau de mesure j. Les coefficients de mesure $a_j$, $b_j$, $c_j$ ne dépendent que des angles de faisceau du capteur LiDAR et ne sont pas fonction des distances de mesure. Ces coefficients de mesure $a_j$, $b_j$, $c_j$ peuvent être des données par le fabriquant du capteur de LiDAR.

## 2) Construction d'un modèle du vent

Lors de cette étape, on construit un modèle du vent, le modèle du vent prend en compte la cohérence spatiale et la cohérence temporelle pour définir la vitesse du vent et ses composantes en tout point de l'espace en fonction de différents paramètres, notamment en fonction du temps, de la position dans l'espace (donc en fonction des coordonnées du point considéré dans le repère (x, y, z)). En d'autres termes, on construit un modèle du vent qui respecte les contraintes de cohérence spatiale et les contraintes de cohérence temporelle. Grâce à ces cohérences spatiale et temporelle, le modèle du vent est représentatif du vent, et permet une détermination précise de la vitesse du vent.

Conformément à une mise en oeuvre de l'invention, le modèle du vent peut déterminer les composantes longitudinale et transversale de la vitesse du vent. Alternativement, le modèle du vent peut déterminer les trois composantes de la vitesse du vent.

Selon un mode de réalisation de l'invention, la cohérence spatiale mise en oeuvre dans le modèle du vent peut être fonction d'une cohérence transversale, d'une cohérence longitudinale et d'une cohérence verticale. Ainsi, on améliore la représentativité du modèle du vent.

Pour ce mode de réalisation, on peut écrire la cohérence transversale au moyen de l'équation suivante : $v_{x,y_1} = f_t(v_{x,y_2}, y_1 - y_2)$ avec x la composante longitudinale, $y_1$ et $y_2$ deux positions transversales ayant les mêmes valeurs longitudinale ($x_1=x_2=x$) et verticale ($z_1=z_2=z$), $v_{x,y_1}$ la composante longitudinale de la vitesse du vent à la position $y_1$, $v_{x,y_2}$ la composante longitudinale de la vitesse du vent à la position $y_2$, $f_t$ une fonction prédéfinie connue. Ainsi, la composante longitudinale de la vitesse du vent au point $y_1$ dépend de la composante longitudinale de la vitesse du vent au point $y_2$ et de la distance entre les points $y_1$ et $y_2$. Selon un exemple de réalisation, la fonction prédéfinie $f_t$ peut être une fonction exponentielle.

Pour ce mode de réalisation, on peut écrire la cohérence verticale au moyen de l'équation suivante :

$$v_{x,z1} = v_{x,z2} \left( \frac{z_1}{z_2} \right)^{\alpha}$$

avec x la composante longitudinale, $z_1$ et $z_2$ deux positions verticales ayant les mêmes valeurs longitudinale ($x_1=x_2=x$) et transversale ($y_1=y_2=y$), $v_{x,z1}$ la composante longitudinale de la vitesse du vent à la position $z_1$, $v_{x,z2}$ la composante longitudinale de la vitesse du vent à la position $z_2$, $\alpha$ le coefficient de la loi de puissance. Pour cette équation, le référentiel de la hauteur z est défini par rapport au pied du mât de l'éolienne (et non au niveau du capteur LiDAR). Ainsi, la composante longitudinale de la vitesse du vent au point $z_1$ dépend de la composante longitudinale de la vitesse du vent au point $z_2$ et du rapport entre les hauteurs des points $z_1$ et $z_2$. Le coefficient $\alpha$ de la loi de puissance peut être choisi comme constant, ou peut être estimé en utilisant des mesures du capteur LiDAR, par exemple selon le procédé décrit dans la demande de brevet ayant le numéro de dépôt FR 19/06569.

Pour ce mode de réalisation, on peut écrire la cohérence longitudinale au moyen de l'équation $v_{x,x1}(k) = f_l(v_{x,x2}(k), x_1 - x_2)$ suivante : avec x la composante longitudinale, $x_1$ et $x_2$ deux positions longitudinales ayant les mêmes valeurs transversale ($y_1=y_2=y$) et verticale ($z_1=z_2=z$), $v_{x,x1}$ la composante longitudinale de la vitesse du vent à la position $x_1$, $v_{x,x2}$ la composante longitudinale de la vitesse du vent à la position $x_2$, $f_l$ une fonction prédéfinie connue. Ainsi, la composante longitudinale de la vitesse du vent au point $x_1$ dépend de la composante longitudinale de la vitesse du vent au point $x_2$ et de la distance entre les points $x_1$ et $x_2$. Selon un exemple de réalisation, la fonction prédéfinie $f_l$ peut être une fonction exponentielle.

Par la cohérence temporelle, on entend la variation des composantes de la vitesse du vent dans le temps en une même position, c'est-à-dire pour les mêmes valeurs x, y et z. En d'autres termes, la cohérence temporelle peut être formulée comme une relation entre les composantes de la vitesse du vent entre deux pas de temps discrets consécutifs, notés k et k -1.

Conformément à une mise en oeuvre de l'invention, l'une des cohérences temporelles bien connues est obtenue en mettant en oeuvre le spectre de Kaimal qui peut se définir par :

$$S_t(f) = \sigma_t^2 \frac{4 \frac{L_t}{U}}{\left(1 + 6f \frac{L_t}{U}\right)^{\frac{5}{3}}}$$

avec f la fréquence en Hertz, t représente la composante de la vitesse du vent (t peut donc correspondre à x, y ou z), $S_t$ est le spectre de Kaimal de la composante t de la vitesse vent, U est la vitesse moyenne du vent à la hauteur du rotor de l'éolienne, $L_t$ est le paramètre d'échelle intégrale de la composante t de la vitesse du vent et $\sigma_t$ est la variance déterminée par l'intensité de la turbulence du vent. En effet, le spectre de Kaimal permet de déterminer une fonction de transfert discrète qui peut relier une valeur de vent à l'instant k à une valeur de vent à l'instant k-1.

Pour le mode de réalisation, pour lequel on détermine uniquement les composantes longitudinales et transversales de la vitesse du vent, on peut poser w un vecteur de dimensions 2n, qui comprend d'abord les composantes longitudinales de la vitesse du vent pour les n points considérés, et ensuite, les composantes transversales de la vitesse du vent pour les n points considérés. Pour illustrer ce vecteur $\omega$ dans un cas simple, si on considère un premier point ayant des composantes longitudinale et transversale de la vitesse du vent $v_{x1}$, $v_{y1}$, et un deuxième point ayant les composantes longitudinale et transversale de la vitesse du vent $v_{x2}$, $v_{y2}$, le vecteur $\omega$ s'écrit :

$$\omega = \begin{pmatrix} v_{x1} & v_{x2} & v_{y1} & v_{y2} \end{pmatrix}^T .$$

Au moyen de cette notation, et en notant que le spectre de Kaimal est la transformée de Fourier de la fonction d'autocorrélation de la vitesse du vent, on peut écrire l'équation suivante

$$w(k) = A_s w(k-1)$$

pour la cohérence temporelle : avec $A_s$ une matrice constante qui est la fonction d'autocorrélation de la vitesse du vent obtenue par un spectre de Kaimal. La matrice As peut être obtenue à partir de la formule du spectre de Kaimal telle que définie ci-dessus. Ainsi, cette équation donne le lien entre la vitesse du vent $\omega$ à l'instant k et la vitesse du vent $\omega$ à l'instant k-1.

Alternativement, pour la cohérence temporelle, on peut mettre en oeuvre le spectre de Von Karman ou toute représentation analogue.

3) Mesure de la vitesse du vent

Lors de cette étape, on mesure, en continu, l'amplitude et la direction du vent en au moins un plan de mesure distant de l'éolienne au moyen du capteur LiDAR. Cette mesure correspond au signal reçu par le capteur LiDAR en réponse au signal émis par le capteur LiDAR. En effet, par interférométrie et effet Doppler, une partie de signal Laser émis par le capteur LiDAR est réfléchi par les molécules d'air aux points de mesure et également par les aérosols (poussières et microparticules en suspension).

Conformément à une mise en oeuvre de réalisation de l'invention, les plans de mesure peuvent être éloignés d'une distance longitudinale (selon l'axe x de la figure 2) comprise préférentiellement entre 50 et 400 m du plan du rotor. Ainsi, il est possible de déterminer l'évolution de la vitesse du vent sur une longue distance en amont de l'éolienne, ce qui permet également d'augmenter la précision de la détermination de la vitesse moyenne du vent.

Selon un mode de réalisation de l'invention, on peut réaliser la mesure de la vitesse du vent en plusieurs plans de mesure (dont les distances de mesures ne sont pas imposées par le procédé selon l'invention) pour faciliter la détermination de la vitesse du vent, ce qui permet à l'utilisateur du capteur LiDAR de paramétrer librement le capteur LiDAR

Pour le mode de réalisation mettant en oeuvre un LiDAR pulsé, les mesures sont obtenues successivement aux points de mesure illustrés en figure 2, en commençant par le faisceau b1, puis le faisceau b2, ... jusqu'au faisceau b4. Une caractéristique intéressante de ce système est qu'il permet de mesurer la projection de la vitesse du vent à plusieurs distances, simultanément, pour un faisceau donné. Il est ainsi possible d'obtenir, par exemple, 10 distances successives entre 50m et 400m, à un taux d'échantillonnage du capteur LiDAR. A chaque temps d'échantillonnage, les seules mesures du faisceau courant sélectionné sont rafraîchies.

4) Détermination de la vitesse du vent

Lors de cette étape, on détermine la vitesse du vent en différents points de l'espace en amont de l'éolienne au moyen d'un filtre de Kalman adaptatif qui met en oeuvre le modèle de vent construit à l'étape 2, le modèle des mesures du capteur LiDAR construit à l'étape 1 et les mesures réalisées à l'étape 3. Les différents points de détermination de la vitesse du vent sont des points d'estimation prédéfinis. L'application du filtre de Kalman permet d'obtenir un observateur d'état. Le filtre de Kalman adaptatif permet une adaptation de la matrice de covariance du bruit en fonction de la vitesse du vent. Ainsi, le filtre est performant sur une large gamme de vitesse du vent. En outre, le filtre de Kalman adaptatif est robuste vis-à-vis des variations de la vitesse du vent.

On rappelle qu'un observateur d'état, ou un estimateur d'état, est, en automatique et en théorie des systèmes, une extension d'un modèle représenté sous forme de représentation d'état. Lorsque l'état du système n'est pas mesurable, on construit un observateur qui permet de reconstruire l'état à partir d'un modèle.

Pour un mode de réalisation mettant en oeuvre les équations illustrées à l'étape 2, on peut écrire le modèle d'état suivant, avec l'équation d'état : $v_x(k) = A_s v_x(k-1) + \eta(k)$ et les équations de sortie :

$$\begin{cases} v_{x,y_1}(k) - f_t\big(v_{x,y_2}(k), y_1 - y_2\big) = \epsilon_t(x_1, x_2, y_1, y_2, z_1, z_2, k) \\ v_{x,z_1} - v_{x,z_2}\left(\dfrac{z_1}{z_2}\right)^\alpha = \epsilon_v(x_1, x_2, y_1, y_2, z_1, z_2, k) \\ v_{x,x_1}(k) - f_l\big(v_{x,x_2}(k), x_1 - x_2\big) = \epsilon_l(x_1, x_2, y_1, y_2, z_1, z_2, k) \\ m_{j,x}(k) = a_j v_{j,x}(k) + b_j v_{j,y}(k) + c_j v_{jz}(k) + \epsilon_m(k) \end{cases}$$

Avec $\eta$ le bruit de l'équation d'état, $\epsilon_t$ le bruit transversal, $\epsilon_v$ le bruit vertical, $\epsilon_l$ le bruit longitudinal, $\epsilon_m$ le bruit de mesure.

Ainsi, le problème d'estimation du vecteur w(k) devient un problème d'estimation d'état, qui ne nécessite pas d'imposer la position des plans de mesure du capteur LiDAR. Une façon d'estimer le vecteur d'état inconnu w(k), qui peut prendre en compte les informations sur les bruits $\eta(k)$ et $\epsilon(k)$, est d'appliquer l'algorithme du filtre de Kalman

$$\varepsilon = \begin{pmatrix} \varepsilon_t \\ \varepsilon_v \\ \varepsilon_l \\ \varepsilon_m \end{pmatrix}$$

adaptatif, avec la notation suivante : En effet, le filtre de Kalman adaptatif apporte la solution du problème d'optimisation avec

$$J_r(k) = \left\{ (w(0) - \overline{w}(0))^T P_0^{-1} (w(0) - \overline{w}(0)) + \sum_{j=1}^{k} \left( \eta(j-1)^T Q^{-1} \eta(j-1) + \epsilon(j)^T R^{-1} \epsilon(j) \right) \right\}$$

où $P_0$, Q et R sont des matrices de réglage de dimensions appropriées, $\overline{\omega}(0)$ est la valeur moyenne de l'état initial $\omega(0)$.

Afin de résoudre ce problème d'optimisation au moyen du filtre de Kalman adaptatif, on peut poser les hypothèses suivantes, notamment pour une interprétation mathématique de $P_0$, Q et R :

- $\omega(0)$ est un vecteur aléatoire non corrélé aux bruits $\eta(k)$ et $\varepsilon(k)$
- $\omega(0)$ a une moyenne connue $\overline{\omega}(0)$ avec $P_0$ comme matrice de covariance, c'est-à-dire

$$P_0 = E[(w(0) - \overline{w}(0))(w(0) - \overline{w}(0))^T]$$

- $\eta(k)$ et $\varepsilon(k)$ sont des processus de bruit blanc non corrélés à moyenne nulle avec des matrices de covariance Q et R, respectivement, c'est-à-dire :

$$E[\eta(k)\eta(j)^T] = \begin{cases} Q \ si \ k = j \\ 0 \ si \ k \neq j \end{cases}$$

$$E[\epsilon(k)\epsilon(j)^T] = \begin{cases} R \ si \ k = j \\ 0 \ si \ k \neq j \end{cases}$$

$$E[\epsilon(k)\eta(j)^T] = 0 \ pour \ tous \ k, j$$

Cette dernière hypothèse implique que Q et R sont des matrices semi-définies positives symétriques.

De plus, étant donné que dans le modèle d'état les bruits $\varepsilon_l$, $\varepsilon_v$, et $\varepsilon_t$ dépendent des distances de mesure $x_1$, $x_2$, $y_1$, $y_2$, $z_1$, $z_2$, la matrice de covariance R est adaptée en fonction des distances de mesure. Selon un mode de réalisation, R peut être une fonction polynomiale des distances de mesure. Alternativement, R peut être obtenue à partir d'une cartographie, d'un réseau de neurones, etc.

On peut adopter les notations suivantes :

- $\hat{w}(k|k-1)$ est l'estimation du vecteur w(k) étant donné les mesures réalisées jusqu'au temps k-1,
- $\hat{w}(k|k)$ est l'estimation vecteur w(k) étant donné les mesures réalisées jusqu'au temps k,
- $P(k|k-1)$ est la matrice de covariance du vecteur w(k) étant donné les mesures réalisées jusqu'au temps k-1,
- $P(k|k)$ est la matrice de covariance du vecteur w(k) étant donné les mesures réalisées jusqu'au temps k.

Ensuite, l'algorithme du filtre de Kalman adaptatif est mis en oeuvre pour déterminer la vitesse du vent en différents points en mettant en oeuvre les équations suivantes :
D'une part, une mise à jour temporelle :

$$\begin{cases} \hat{w}(k|k-1) = A_s \hat{w}(k-1|k-1) \\ P(k|k-1) = A_s P(k-1|k-1) A_s^T + Q \end{cases}$$

D'autre part, une mise à jour des mesures :

$$\begin{cases} K(k) & = P(k|k-1)C_a^T \left(C_a P(k|k-1)C_a^T + R\right)^{-1} \\ \hat{w}(k|k) & = \hat{w}(k|k-1) + K(k)\left(y(k) - C_a\hat{w}(k|k-1)\right) \\ P(k|k) & = (I - K(k)C_a)\,P(k|k-1) \end{cases}$$

Avec $C_a$ étant obtenu en linéarisant les équations de sortie du modèle d'état autour de $\hat{w}(k|k-1)$, y(k) les mesures du capteur LiDAR et I la matrice identité.

Ainsi, ces étapes permettent de déterminer le vecteur ω qui comporte les composantes de la vitesse du vent en plusieurs points. En d'autres termes, ces étapes permettent de déterminer les composantes de la vitesse du vent en plusieurs points.

5) Détermination de la vitesse moyenne du vent

Lors de cette étape, on détermine la vitesse moyenne du vent dans un plan vertical à une distance en amont de l'éolienne (la distance est définie au moyen de la direction longitudinale) au moyen des vitesses du vent déterminées à l'étape 4, en particulier les vitesses du vent dans le plan vertical considéré.

Selon un mode de réalisation, la vitesse moyenne du vent peut être la moyenne des composantes longitudinales de la vitesse du vent dans le plan considéré.

Selon une réalisation préférée de l'invention, la vitesse moyenne du vent peut être la moyenne des composantes longitudinales de la vitesse du vent dans le plan considéré, en considérant uniquement les valeurs de la vitesse du vent dans une surface qui correspond à la surface balayée par le rotor de l'éolienne. En d'autres termes, on projette sur le plan vertical considéré la surface balayée par le rotor de l'éolienne (un cercle de rayon la longueur des pales de l'éolienne à la hauteur de la nacelle), et on moyenne les vitesses du vent pour les points du plan vertical appartenant à cette projection, cette vitesse moyenne est généralement notée RAWS (de l'anglais « rotor average wind speed ») et est couramment utilisée pour le contrôle et/ou le diagnostic et/ou la surveillance d'une éolienne.

La présente invention concerne également un procédé de contrôle d'une éolienne équipée d'un capteur LiDAR. Pour ce procédé, on met en oeuvre les étapes suivantes :

- on détermine la vitesse moyenne du vent au moyen du procédé de détermination de vitesse moyenne du vent selon l'une quelconque des variantes décrites ci-dessus ; et

- on contrôle l'éolienne en fonction de la vitesse moyenne du vent déterminée.

La détermination précise et en temps réel de la vitesse moyenne du vent permet un contrôle adapté de l'éolienne, en termes de minimisation des effets sur la structure de l'éolienne et de maximisation de la puissance récupérée. En effet, au moyen de ce contrôle, le LiDAR permet de réduire les charges sur la structure, dont les pales et le mât représentent 54% du coût. Par conséquent, l'utilisation d'un capteur LiDAR permet d'optimiser la structure de l'éolienne, et donc de diminuer les coûts et la maintenance.

Le procédé peut comporter en outre une étape intermédiaire qui détermine la vitesse moyenne du vent dans le plan du rotor de l'éolienne à partir de la vitesse moyenne du vent déterminée par le procédé. Pour cela, on peut tenir compte du temps du déplacement du vent entre le plan vertical et le plan du rotor (il peut être calculé notamment en prenant en compte l'hypothèse figée de Taylor), on peut en outre tenir compte du phénomène d'induction entre le plan vertical et le plan du rotor (par exemple au moyen d'un facteur d'induction), le phénomène d'induction traduit le freinage du vent en amont de l'éolienne lié à la présence des pales de l'éolienne. Puis, on contrôle l'éolienne en fonction de la vitesse moyenne du vent dans le plan du rotor.

Conformément à une mise en oeuvre de l'invention, on peut commander l'angle d'inclinaison des pales et/ou le couple électrique de récupération du générateur de l'éolienne en fonction de la vitesse du vent. D'autres types de dispositif de régulation peuvent être utilisés.

Selon un mode de réalisation de l'invention, l'angle d'inclinaison des pales et/ou le couple électrique de récupération peuvent être déterminés au moyen de cartographies de l'éolienne en fonction de la vitesse du vent au niveau du rotor. Par exemple, on peut appliquer le procédé de contrôle décrit dans la demande de brevet FR 2976630 A1 (US 2012-0321463).

De plus, l'invention concerne un produit programme d'ordinateur, qui comprend des instructions de code agencés pour mettre en oeuvre les étapes d'un des procédés précédemment décrits (procédé de détermination de la vitesse dans le plan du rotor, procédé de contrôle). Le programme peut être exécuté sur une unité de traitement du capteur LiDAR, ou sur tout moyen analogue, lié au capteur LiDAR ou à l'éolienne.

Selon un aspect, la présente invention concerne également un capteur LiDAR pour éolienne, qui comprend une unité de traitement configurée pour mettre en oeuvre un des procédés précédemment décrits (procédé de détermination de la vitesse moyenne du vent, procédé de contrôle).

Conformément à une mise en oeuvre de l'invention, le capteur LiDAR peut être un capteur LiDAR scanné, LiDAR continu ou LiDAR pulsé. De préférence, le capteur LiDAR est un capteur LiDAR pulsé.

L'invention concerne également une éolienne, notamment une éolienne offshore (en mer) ou onshore (sur terre) équipée d'un capteur LiDAR tel que décrit ci-dessus. Selon un mode de réalisation de l'invention, le capteur LiDAR peut être disposé sur la nacelle de l'éolienne ou dans le nez de l'éolienne (à l'extrémité de la nacelle de l'éolienne). Le capteur LiDAR est dirigé de telle sorte à réaliser une mesure du vent en amont de l'éolienne (c'est-à-dire avant l'éolienne et selon son axe longitudinal, désigné par l'axe x sur la figure 2). Selon un mode de réalisation, l'éolienne peut être conforme à l'éolienne illustrée en figure 2.

Pour le mode de réalisation du procédé de contrôle, l'éolienne peut comprendre des moyens de contrôle, par exemple le contrôle de l'angle de pitch (pouvant être traduit par angle de tangage) d'au moins une pale de l'éolienne ou le couple électrique, pour mettre en oeuvre de contrôle le procédé selon l'invention.

Comme il va de soi, l'invention ne se limite pas aux seules formes de réalisation décrites ci-dessus à titre d'exemple, elle embrasse au contraire toutes les variantes de réalisation.

## Exemple

Les caractéristiques et avantages du procédé selon l'invention ressortiront plus clairement à l'aide de l'exemple présenté ci-dessous.

Pour cet exemple, on simule le vent au moyen d'un simulateur ainsi que les mesures du capteur LiDAR, et on détermine la vitesse moyenne du vent au moyen du procédé selon un mode de réalisation de l'invention. Le mode de réalisation de l'invention réalisé met en oeuvre les équations de cohérence spatiale et temporelle décrites, et détermine la composante longitudinale moyenne de la vitesse du vent dans un plan vertical.

Selon une première configuration, les distances des plans de mesure sont : [50, 70, 90, 100, 120, 140, 160, 180, 190, 200] mètres.

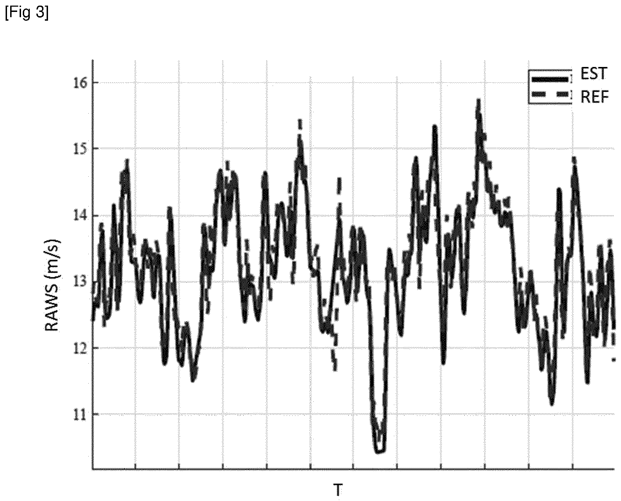

La figure 3 illustre une comparaison de la vitesse moyenne du vent RAWS en m/s en fonction du temps T pour une distance entre le plan du rotor et le plan vertical de 100m. Sur cette figure, la courbe en traits pointillés représente la courbe de référence REF, et la courbe en trait continu représente la courbe de la vitesse moyenne du vent EST obtenu au moyen du procédé selon l'invention. On remarque que les deux courbes sont quasiment superposées. Par conséquent, le procédé selon l'invention permet une détermination précise de la vitesse moyenne du vent.

Selon une deuxième configuration, les distances des plans de mesure sont : [50, 80, 90, 110, 130, 150, 170, 180, 190, 200] mètres.

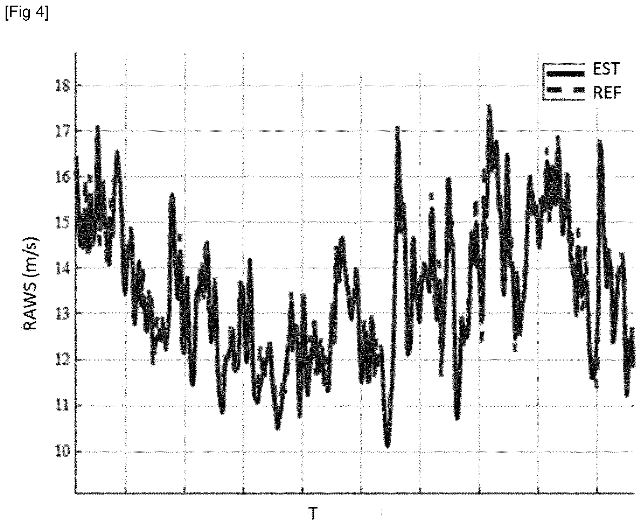

La figure 4 illustre une comparaison de la vitesse moyenne du vent RAWS en m/s en fonction du temps T pour une distance entre le plan du rotor et le plan vertical de 110m. Sur cette figure, la courbe en traits pointillés représente la courbe de référence REF, et la courbe en trait continu représente la courbe de la vitesse moyenne du vent EST obtenu au moyen du procédé selon l'invention. On remarque que les deux courbes sont quasiment superposées. Par conséquent, le procédé selon l'invention permet une détermination précise de la vitesse moyenne du vent.

Ces deux courbes permettent également de montrer que le procédé est précis quelle que soit la distance considérée, sans imposer de distance de plan de mesure.

## Revendications

**1.** Procédé de détermination de la vitesse moyenne du vent dans un plan vertical au moyen d'un capteur LiDAR (2) monté sur une éolienne (1), **caractérisé en ce qu'**on met en oeuvre les étapes suivantes :

a. On construit un modèle desdites mesures LiDAR (MOD M), ledit modèle desdites mesures LiDAR (MOD M) s'écrit : $m_{j,x}(k) = a_j v_{j,x}(k) + b_j v_{j,y}(k) + c_j v_{j,z}(k)$ avec m la mesure, x la direction longitudinale, j un faisceau de mesure dudit capteur LiDAR, $m_{j,x}$ la mesure sur le faisceau de mesure j à la distance x, k le temps discret, v la vitesse du vent, $v_{j,x}$ la composante longitudinale la vitesse du vent pour le faisceau de mesure j, $v_{j,y}$ la composante transversale la vitesse du vent pour le faisceau de mesure j, $v_{j,z}$ la composante verticale de la vitesse du vent pour le faisceau de mesure j, $a_j$, $b_j$, $c_j$ des coefficients de mesure constants pour le faisceau de mesure j ;
b. On construit un modèle du vent (MOD V) prenant en compte la cohérence spatiale et la cohérence temporelle de la vitesse du vent, ladite cohérence spatiale dudit modèle de vent est fonction d'une cohérence transversale, d'une cohérence verticale, et d'une cohérence longitudinale et ladite cohérence temporelle dudit modèle de vent s'écrit : $w(k) = A_s w(k - 1)$ avec k le temps discret, $\omega$ un vecteur qui comporte d'abord les composantes longitudinales de la vitesse du vent en n points d'estimation prédéfinis, puis les composantes transversales de la vitesse du vent pour lesdits n points d'estimation prédéfinis, $A_s$ est une matrice constante qui est la fonction d'autocorrélation de la vitesse du vent obtenue par un spectre de Kaimal ou pour la cohérence temporelle on met en oeuvre un spectre de Von Karman ;

c. On mesure (MES) au moyen dudit capteur LiDAR l'amplitude et la direction du vent en au moins un plan de mesure (PM) distant de ladite éolienne (1) en plusieurs faisceaux de mesure (b1, b2, b3, b4) ;

d. On détermine la vitesse du vent en différents points d'estimation prédéfinis de l'espace en amont de l'éolienne au moyen d'un filtre de Kalman adaptatif (KAL) qui met en oeuvre ledit modèle desdites mesures LiDAR (MOD M), ledit modèle de vent (MOD V), et lesdites mesures (MES) ; et

e. On détermine la vitesse moyenne du vent (RAWS) dans ledit plan vertical à une distance de ladite éolienne au moyen desdites vitesses du vent déterminées pour lesdits différents points d'estimation prédéfinis appartenant audit plan vertical considéré par la moyenne des composantes longitudinales de la vitesse du vent des points appartenant audit plan vertical.

2. Procédé selon la revendication 1, dans lequel ladite cohérence transversale s'écrit : $v_{x,y1} = f_t(v_{x,y2}, y_1 - y_2)$ avec x la composante longitudinale, $y_1$ et $y_2$ deux positions transversales ayant les mêmes valeurs longitudinale et verticale, $v_{x,y1}$ la composante longitudinale de la vitesse du vent à la position $y_1$, $v_{x,y2}$ la composante longitudinale de la vitesse du vent à la position $y_2$, $f_t$ une fonction prédéfinie.

3. Procédé selon l'une des revendications 1 ou 2, dans lequel ladite cohérence verticale s'écrit :

$$v_{x,z_1} = v_{x,z_2} \left( \frac{z_1}{z_2} \right)^{\alpha}$$

avec x la composante longitudinale, $z_1$ et $z_2$ deux positions verticales ayant les mêmes valeurs longitudinale et transversale, $v_{x,z1}$ la composante longitudinale de la vitesse du vent à la position $z_1$, $v_{x,z2}$ la composante longitudinale de la vitesse du vent à la position $z_2$, $\alpha$ le coefficient de la loi de puissance.

4. Procédé selon l'une des revendications 1 à 3, dans lequel ladite cohérence longitudinale s'écrit : $v_{x,x1}(k) = f_l(v_{x,x2}(k), x_1 - x_2)$ avec x la composante longitudinale, k le temps discret, $x_1$ et $x_2$ deux positions longitudinales ayant les mêmes valeurs transversale et verticale, $v_{x,x1}$ la composante longitudinale de la vitesse du vent à la position $x_1$, $v_{x,x2}$ la composante longitudinale de la vitesse du vent à la position $x_2$, $f_l$ une fonction prédéfinie.

5. Procédé selon l'une des revendications précédentes, dans lequel on applique ledit filtre de Kalman adaptatif (KAL) aux équations suivantes :

$$v_x(k) = A_s v_x(k - 1) + \eta(k)$$

et

$$\begin{cases} v_{x,y_1}(k) - f_t(v_{x,y_2}(k), y_1 - y_2) = \epsilon_t(x_1, x_2, y_1, y_2, z_1, z_2, k) \\ v_{x,z_1} - v_{x,z_2} \left( \frac{z_1}{z_2} \right)^{\alpha} = \epsilon_v(x_1, x_2, y_1, y_2, z_1, z_2, k) \\ v_{x,x_1}(k) - f_l(v_{x,x_2}(k), x_1 - x_2) = \epsilon_l(x_1, x_2, y_1, y_2, z_1, z_2, k) \\ m_{jx}(k) = a_j v_{j,x}(k) + b_j v_{j,y}(k) + c_j v_{j,z}(k) + \epsilon_m(k) \end{cases}$$

avec k le temps discret, v la vitesse du vent, x la composante longitudinale, $y_1$ et $y_2$ deux positions transversales ayant les mêmes valeurs longitudinale et verticale, $x_1$, $x_2$ deux positions longitudinales ayant les mêmes valeurs transversale et verticale, $z_1$, $z_2$ deux positions verticales ayant les mêmes valeurs longitudinale et transversale,

$v_{x,y1}$ la composante longitudinale de la vitesse du vent à la position $y_1$, $v_{x,y2}$ la composante longitudinale de la vitesse du vent à la position $y_2$, $f_t$ une fonction prédéfinie, $v_{x,x1}$ la composante longitudinale de la vitesse du vent à la position $x_1$, $v_{x,x2}$ la composante longitudinale de la vitesse du vent à la position $x_2$, $f_l$ une fonction prédéfinie, $v_{x,z1}$ la composante longitudinale de la vitesse du vent à la position $z_1$, $v_{x,z2}$ la composante longitudinale de la vitesse du vent à la position $z_2$, $\alpha$ le coefficient de la loi de puissance, j un faisceau de mesure dudit capteur LiDAR (2), $m_{j,x}$ la mesure sur le faisceau de mesure j à la distance x, $v_{j,x}$ la composante longitudinale la vitesse du vent pour le faisceau de mesure j, $v_{j,y}$ la composante transversale la vitesse du vent pour le faisceau de mesure j, $v_{j,z}$ la composante verticale de la vitesse du vent pour le faisceau de mesure j, $a_j$, $b_j$, $c_j$ des coefficients de mesure constants pour le faisceau de mesure j, $\eta$ le bruit de l'équation d'état, $\varepsilon_t$ le bruit transversal, $\varepsilon_v$ le bruit vertical, $\varepsilon_l$ le bruit longitudinal, $\varepsilon_m$ le bruit de mesure, $A_s$ est une matrice constante qui est la fonction d'autocorrélation de la vitesse du vent obtenu par un spectre de Kaimal.

6. Procédé selon l'une des revendications précédentes, dans lequel on détermine ladite vitesse du vent en différents points en mettant en oeuvre les équations suivantes :

$$\begin{cases} \hat{w}(k|k-1) & = A_s\hat{w}(k-1|k-1) \\ P(k|k-1) & = A_s P(k-1|k-1)A_s^T + Q \end{cases}$$

et

$$\begin{cases} K(k) & = P(k|k-1)C_a^T \left( C_a P(k|k-1)C_a^T + R \right)^{-1} \\ \hat{w}(k|k) & = \hat{w}(k|k-1) + K(k)\left(y(k) - C_a\hat{w}(k|k-1)\right) \\ P(k|k) & = (I - K(k)C_a)\, P(k|k-1) \end{cases}$$

avec k le temps discret, $\omega$ un vecteur qui comporte d'abord les composantes longitudinales de la vitesse du vent en n points d'estimation prédéfinis, $\hat{w}(k|k-1)$ est l'estimation du vecteur w(k) étant donné les mesures réalisées jusqu'au temps k-1, $\hat{w}(k|k)$ est l'estimation vecteur w(k) étant donné les mesures réalisées jusqu'au temps k, $P(k|k-1)$ est la matrice de covariance du vecteur w(k) étant donné les mesures réalisées jusqu'au temps k-1, $P(k|k)$ est la matrice de covariance du vecteur w(k) étant donné les mesures réalisées jusqu'au temps k, $A_s$ est une matrice constante qui est la fonction d'autocorrélation de la vitesse du vent obtenu par le spectre de Kaimal, Q et R les matrices de covariance de bruits $\varepsilon(k)$ et $\eta(k)$, $C_a$ est obtenu en linéarisant les équations de sortie autour de $\hat{w}(k|k-1)$, y(k) les mesures dudit capteur LiDAR (2), I la matrice identité.

7. Procédé selon l'une des revendications précédentes, dans lequel on détermine ladite vitesse du vent dans ledit plan vertical à une distance de ladite éolienne par la moyenne des composantes longitudinales de la vitesse du vent des points appartenant audit plan vertical, lesdites vitesses de vent considérées étant celles incluses dans une projection de la surface balayée par le rotor de l'éolienne dans ledit plan vertical considéré.

8. Procédé de contrôle d'une éolienne (1), **caractérisé en ce qu'**on met en oeuvre les étapes suivantes :

    a. on détermine ladite vitesse moyenne du vent au moyen du procédé selon l'une des revendications précédentes ;
    b. on contrôle ladite éolienne (1) en fonction de ladite vitesse moyenne du vent.

9. Capteur LiDAR (2) **caractérisé en ce qu'**il comprend une unité de traitement mettant en oeuvre un procédé selon l'une des revendications 1 à 8.

10. Eolienne (1) **caractérisée en ce qu'**elle comporte un capteur LiDAR (2) selon la revendication 9, ledit capteur LiDAR (2) étant de préférence placé sur la nacelle de ladite éolienne ou dans le nez de l'éolienne.

11. Produit programme d'ordinateur **caractérisé en ce qu'**il comprend des instructions de code qui conduisent l'éolienne selon la revendication 10 à mettre en oeuvre les étapes d'un procédé selon l'une des revendications 1-8, lorsque le programme est exécuté sur l'unité de traitement de ladite éolienne (1).

**Patentansprüche**

1. Verfahren zur Bestimmung der mittleren Windgeschwindigkeit in einer vertikalen Ebene mittels eines auf eine Windkraftanlage (1) montierten LiDAR-Sensors (2), **dadurch gekennzeichnet, dass** die folgenden Schritte durchgeführt werden:

   a. es wird ein Modell der LiDAR-Messungen (MOD M) konstruiert, wobei das Modell der LiDAR-Messungen (MOD M) folgendermaßen geschrieben wird: $m_{j,x}(k) = a_j v_{j,x}(k) + b_j v_{j,y}(k) + c_j v_{j,z}(k)$, mit m der Messung, x der Längsrichtung, j einem Messstrahl des LiDAR-Sensors, $m_{j,x}$ der Messung auf dem Messstrahl j im Abstand x, k der diskreten Zeit, v der Windgeschwindigkeit, $v_{j,x}$ der Längskomponente der Windgeschwindigkeit für den Messstrahl j, $v_{j,y}$ der Querkomponente der Windgeschwindigkeit für den Messstrahl j, $v_{j,z}$ der Vertikalkomponente der Windgeschwindigkeit für den Messstrahl j, $a_j$, $b_j$, $c_j$ konstanten Messkoeffizienten für den Messstrahl j;
   b. es wird ein Modell des Winds (MOD V) unter Berücksichtigung der räumlichen Kohärenz und der zeitlichen Kohärenz der Windgeschwindigkeit konstruiert, die räumliche Kohärenz des Windmodells ist abhängig von einer Querkohärenz, einer vertikalen Kohärenz und einer Längskohärenz, und die zeitliche Kohärenz des Windmodells wird folgendermaßen geschrieben: $\omega(k) = A_s \omega(k - 1)$, mit k der diskreten Zeit, $\omega$ einem Vektor, der zunächst die Längskomponenten der Windgeschwindigkeit in n vordefinierten Schätzpunkten, dann die Querkomponenten der Windgeschwindigkeit für die n vordefinierten Schätzpunkte aufweist, $A_s$ ist eine konstante Matrix, die die durch ein Kaimal-Spektrum erhaltene Autokorrelationsfunktion der Windgeschwindigkeit ist, oder für die zeitliche Kohärenz ein Von-Karman-Spektrum eingesetzt wird;
   c. mittels des LiDAR-Sensors werden die Amplitude und die Richtung des Winds in mindestens einer Messebene (PM) in Abstand zur Windkraftanlage (1) in mehreren Messstrahlen (b1, b2, b3, b4) gemessen (MES);
   d. die Windgeschwindigkeit wird an verschiedenen der Windkraftanlage vorgelagerten vordefinierten Schätzpunkten des Raums mittels eines adaptiven Kalman-Filters (KAL) bestimmt, das das Modell der LiDAR-Messungen (MOD M), das Windmodell (MOD V) und die Messungen (MES) verwendet; und
   e. die mittlere Windgeschwindigkeit (RAWS) in der vertikalen Ebene in einem Abstand zur Windkraftanlage wird mittels der für die zur betrachteten vertikalen Ebene gehörenden verschiedenen vordefinierten Schätzpunkte bestimmten Windgeschwindigkeiten durch den Mittelwert der Längskomponenten der Windgeschwindigkeit der zur vertikalen Ebene gehörenden Punkte bestimmt.

2. Verfahren nach Anspruch 1, wobei die Querkohärenz folgendermaßen geschrieben wird: $v_{x,y_1} = f_t(v_{x,y_2}, y_1 - y_2)$, mit x der Längskomponente, $y_1$ und $y_2$ zwei Querpositionen mit den gleichen Längs- und Vertikalwerten, $v_{x,y_1}$ der Längskomponente der Windgeschwindigkeit in der Position $y_1$, $v_{x,y_2}$ der Längskomponente der Windgeschwindigkeit in der Position $y_2$, $f_t$ einer vordefinierten Funktion.

3. Verfahren nach einem der Ansprüche 1 oder 2, wobei die vertikale Kohärenz folgendermaßen geschrieben wird:

$$v_{x,z1} = v_{x,z2} \left(\frac{z_1}{z_2}\right)^{\alpha}$$

, mit x der Längskomponente, $z_1$ und $z_2$ zwei vertikalen Positionen mit den gleichen Längs- und Querwerten, $v_{x,z1}$ der Längskomponente der Windgeschwindigkeit in der Position $z_1$, $v_{x,z2}$ der Längskomponente der Windgeschwindigkeit in der Position $z_2$, $\alpha$ dem Koeffizienten des Leistungsgesetzes.

4. Verfahren nach einem der Ansprüche 1 bis 3, wobei die Längskohärenz folgendermaßen geschrieben wird: $v_{x,x_1}(k) = f_l(v_{x,x_2}(k), x_1 - x_2)$, mit x der Längskomponente, k der diskreten Zeit, $x_1$ und $x_2$ zwei Längspositionen mit den gleichen Quer- und Vertikalwerten, $v_{x,x_1}$ der Längskomponente der Windgeschwindigkeit in der Position $x_1$, $v_{x,x_2}$ der Längskomponente der Windgeschwindigkeit in der Position $x_2$, $f_l$ einer vordefinierten Position.

5. Verfahren nach einem der vorhergehenden Ansprüche, wobei das adaptive Kalman-Filter (KAL) an die folgenden Gleichungen angewendet wird:

$$v_x(k) = A_s v_x(k - 1) + \eta(k)$$

und

$$\begin{cases} v_{x,y1}(k) - f_t\big(v_{x,y2}(k), y_1 - y_2\big) = \epsilon_t(x_1, x_2, y_1, y_2, z_1, z_2, k) \\ v_{x,z_1} - v_{x,z_2}\left(\dfrac{z_1}{z_2}\right)^{\alpha} = \epsilon_v(x_1, x_2, y_1, y_2, z_1, z_2, k) \\ v_{x,x_1}(k) - f_l\big(v_{x,x_2}(k), x_1 - x_2\big) = \epsilon_l(x_1, x_2, y_1, y_2, z_1, z_2, k) \\ m_{j,x}(k) = a_j v_{j,x}(k) + b_j v_{j,y}(k) + c_j v_{j,z}(k) + \epsilon_m(k) \end{cases}$$

mit k der diskreten Zeit, v der Windgeschwindigkeit, x der Längskomponente, $y_1$ und $y_2$ zwei Querpositionen, die die gleichen Längs- und Vertikalwerte haben, $x_1$, $x_2$ zwei Längspositionen, die die gleichen Quer- und Vertikalwerte haben, $z_1$, $z_2$ zwei vertikalen Positionen, die die gleichen Längs- und Querwerte haben, $v_{x,y1}$ der Längskomponente der Windgeschwindigkeit in der Position $y_1$, $v_{x,y2}$ der Längskomponente der Windgeschwindigkeit in der Position $y_2$, $f_t$ einer vordefinierten Funktion, $v_{x,x1}$ der Längskomponente der Windgeschwindigkeit in der Position $x_1$, $v_{x,x2}$ der Längskomponente der Windgeschwindigkeit in der Position $x_2$, $f_l$ einer vordefinierten Funktion, $v_{x,z1}$ der Längskomponente der Windgeschwindigkeit in der Position $z_1$, $v_{x},z_2$ der Längskomponente der Windgeschwindigkeit in der Position $z_2$, $\alpha$ dem Koeffizienten des Leistungsgesetzes, j einem Messstrahl des LiDAR-Sensors (2), $m_{j,x}$ der Messung auf dem Messstrahl j im Abstand x, $v_{j,x}$ der Längskomponente der Windgeschwindigkeit für den Messstrahl j, $v_{j,y}$ der Querkomponente der Windgeschwindigkeit für den Messstrahl j, $v_{j,z}$ der Vertikalkomponente der Windgeschwindigkeit für den Messstrahl j, $a_j$, $b_j$, $c_j$ konstanten Messkoeffizienten für den Messstrahl j, $\eta$ dem Rauschen der Zustandsgleichung, $\epsilon_t$ dem Querrauschen, $\epsilon_v$ dem Vertikalrauschen, $\epsilon_l$ dem Längsrauschen, $\epsilon$ dem Messrauschen, A ist eine konstante Matrix, die die durch ein Kaimal-Spektrum erhaltene Autokorrelationsfunktion der Windgeschwindigkeit ist.

6. Verfahren nach einem der vorhergehenden Ansprüche, wobei die Windgeschwindigkeit an verschiedenen Punkten unter Verwendung der folgenden Gleichungen bestimmt wird:

$$\begin{cases} \widehat{\omega}(k|k-1) = A_s \widehat{\omega}(k-1|k-1) \\ P(k|k-1) = A_s\, P(k-1|k-1)A_s^T + Q \end{cases}$$

und

$$\begin{cases} K(k) = P(k|k-1)C_a^T(C_a P(k|k-1)C_a^T + R)^{-1} \\ \widehat{\omega}(k|k) = \widehat{\omega}(k|k-1) + K(k)\big(y(k) - C_a\widehat{\omega}(k|k-1)\big) \\ P(k|k) = (I - K(k)C_a)P(k|k-1) \end{cases}$$

mit k der diskreten Zeit, $\omega$ einem Vektor, der zuerst die Längskomponenten der Windgeschwindigkeit in n vordefinierten Schätzpunkten aufweist, $\widehat{\omega}(k|k - 1)$ ist die Schätzung des Vektors $\omega(k)$ angesichts der bis zum Zeitpunkt k-1 durchgeführten Messungen, $\omega(k|k)$ ist die Vektorschätzung $\omega(k)$ angesichts der bis zum Zeitpunkt k durchgeführten Messungen, $P(k|k - 1)$ ist die Kovarianzmatrix des Vektors $\omega(k)$ angesichts der bis zum Zeitpunkt k-1 durchgeführten Messungen, $P(k|k)$ ist die Kovarianzmatrix des Vektors $\omega(k)$ angesichts der bis zum Zeitpunkt k durchgeführten Messungen, $A_s$ ist eine konstante Matrix, die die durch das Kaimal-Spektrum erhaltene Autokorrelationsfunktion der Windgeschwindigkeit ist, Q und R den Rauschkovarianzmatrizen $\epsilon(k)$ und $\eta(k)$, $C_a$ wird durch Linearisieren der Ausgangsgleichungen um $\widehat{\omega}(k|k - 1)$ herum erhalten, y(k) den Messungen des LiDAR-Sensors (2), I der Identitätsmatrix.

7. Verfahren nach einem der vorhergehenden Ansprüche, wobei die Windgeschwindigkeit in der vertikalen Ebene in einem Abstand von der Windkraftanlage durch den Mittelwert der Längskomponenten der Windgeschwindigkeit der zur vertikalen Ebene gehörenden Punkte bestimmt wird, wobei die betrachteten Windgeschwindigkeiten diejenigen sind, die in einer Projektion der vom Rotor der Windkraftanlage in der betrachteten vertikalen Ebene überstrichenen Fläche enthalten sind.

8. Verfahren zur Steuerung einer Windkraftanlage (1), **dadurch gekennzeichnet, dass** die folgenden Schritte durchgeführt werden:

    a. die mittlere Windgeschwindigkeit wird mittels des Verfahrens nach einem der vorhergehenden Ansprüche bestimmt;
    b. die Windkraftanlage (1) wird abhängig von der mittleren Windgeschwindigkeit gesteuert.

9. LiDAR-Sensor (2), **dadurch gekennzeichnet, dass** er eine Verarbeitungseinheit enthält, die ein Verfahren nach einem der Ansprüche 1 bis 8 durchführt.

10. Windkraftanlage (1), **dadurch gekennzeichnet, dass** sie einen LiDAR-Sensor (2) nach Anspruch 9 aufweist, wobei der LiDAR-Sensor (2) vorzugsweise auf der Gondel der Windkraftanlage oder in der Nase der Windkraftanlage angeordnet ist.

11. Computerprogrammprodukt, **dadurch gekennzeichnet, dass** es Codeanweisungen enthält, die die Windkraftanlage nach Anspruch 10 dazu bringen, die Schritte eines Verfahrens nach einem der Ansprüche 1-8 auszuführen, wenn das Programm auf der Verarbeitungseinheit der Windkraftanlage (1) ausgeführt wird.

**Claims**

1. Method for determining the average wind speed in a vertical plane by means of a LiDAR sensor (2) mounted on a wind turbine (1), **characterized in that** the following steps are implemented:

    a. a model of said LiDAR measurements (MOD M) is constructed, said model of said LiDAR measurements (MOD M) being expressed as: $m_{j,x}(k) = a_j v_{j,x}(k) + b_j v_{j,y}(k) + c_j v_{j,z}(k)$ with m the measurement, x the longitudinal direction, j a measurement beam from said LiDAR sensor, $m_{j,x}$ the measurement on the measurement beam j at the distance x, k the discrete time, v the wind speed, $v_{j,x}$ the longitudinal component of the wind speed for the measurement beam j, $v_{j,y}$ the transverse component of the wind speed for the measurement beam j, $v_{j,z}$ the vertical component of the wind speed for the measurement beam j, $a_j$, $b_j$, $c_j$ constant measurement coefficients for the measurement beam j;
    b. a model of the wind (MOD V) is constructed taking into account the spatial consistency and the temporal consistency of the wind speed, said spatial consistency of said wind model is a function of a transverse consistency, of a vertical consistency, and of a longitudinal consistency and said temporal consistency of said wind model is expressed as: $w(k) = A_s w(k - 1)$ with k the discrete time, $\omega$ a vector which first of all comprises the longitudinal components of the wind speed at n predefined estimation points, then the transverse components of the wind speed for said n predefined estimation points, $A_s$ is a constant matrix which is the function of self-correlation of the wind speed obtained by a Kaimal spectrum or, for the temporal consistency, a Von Karman spectrum is implemented;
    c. the amplitude and the direction of the wind is measured (MES), by means of said LiDAR sensor, in at least one measurement plane (PM) remote from said wind turbine (1) in several measurement beams (b1, b2, b3, b4);
    d. the wind speed is determined at different predefined estimation points of the space upstream of the wind turbine by means of an adaptive Kalman filter (KAL) which implements said model of said LiDAR measurements (MOD M), said wind model (MOD V), and said measurements (MES); and
    e. the average wind speed (RAWS) is determined in said vertical plane at a distance from said wind turbine by means of said wind speeds determined for said different predefined estimation points belonging to said vertical plane considered by the average of the longitudinal components of the wind speed of the points belonging to said vertical plane.

2. Method according to Claim 1, wherein said transverse consistency is expressed as: $v_{x,y_1} = f_t(v_{x,y_2}, y_1 - y_2)$ with x the longitudinal component, $y_1$ and $y_2$ two transverse positions having the same longitudinal and vertical values, $v_{x,y1}$ the longitudinal component of the wind speed at the position $y_1$, $v_{x,y2}$ the longitudinal component of the wind speed at the position $y_2$, $f_t$ a predefined function.

3. Method according to one of Claims 1 and 2, wherein said vertical consistency is expressed as:

$$v_{x,z_1} = v_{x,z_2} \left( \frac{z_1}{z_2} \right)^{\alpha}$$

with x the longitudinal component, $z_1$ and $z_2$ two vertical positions having the same longitudinal and transverse values, $v_{x,z1}$ the longitudinal component of the wind speed at the position $z_1$, $v_{x,z2}$ the longitudinal component of the wind speed at the position $z_2$, $\alpha$ the coefficient of the power law.

4. Method according to one of Claims 1 to 3, wherein said longitudinal consistency is expressed as: $v_{x,x1}(k) = f_l(v_{x,x2}(k),x_1 - x_2)$ with x the longitudinal component, k the discrete time, $x_1$ and $x_2$ two longitudinal positions having the same transverse and vertical values, $v_{x,x1}$ the longitudinal component of the wind speed at the position $x_1$, $v_{x,x2}$ the longitudinal component of the wind speed at the position $x_2$, $f_l$ a predefined function.

5. Method according to one of the preceding claims, wherein said adaptive Kalman filter (KAL) is applied to the following equations:

$$v_x(k) = A_s v_x(k-1) + \eta(k)$$

and

$$\begin{cases} v_{x,y_1}(k) - f_t\big(v_{x,y_2}(k), y_1 - y_2\big) = \epsilon_t(x_1, x_2, y_1, y_2, z_1, z_2, k) \\ v_{x,z_1} - v_{x,z_2}\left(\frac{z_1}{z_2}\right)^{\alpha} = \epsilon_v(x_1, x_2, y_1, y_2, z_1, z_2, k) \\ v_{x,x_1}(k) - f_l\big(v_{x,x_2}(k), x_1 - x_2\big) = \epsilon_l(x_1, x_2, y_1, y_2, z_1, z_2, k) \\ m_{j,x}(k) = a_j v_{j,x}(k) + b_j v_{j,y}(k) + c_j v_{j,z}(k) + \epsilon_m(k) \end{cases}$$

with k the discrete time, v the wind speed, x the longitudinal component, $y_1$ and $y_2$ two transverse positions having the same longitudinal and vertical values, $x_1$, $x_2$ two longitudinal positions having the same transverse and vertical values, $z_1$, $z_2$ two vertical positions having the same longitudinal and transverse values, $v_{x,y1}$ the longitudinal component of the wind speed at the position $y_1$, $v_{x,y2}$ the longitudinal component of the wind speed at the position $y_2$, $f_t$ a predefined function, $v_{x,x1}$ the longitudinal component of the wind speed at the position $x_1$, $v_{x,x2}$ the longitudinal component of the wind speed at the position $x_2$, $f_l$ a predefined function, $v_{x,z1}$ the longitudinal component of the wind speed at the position $z_1$, $v_{x,z2}$ the longitudinal component of the wind speed at the position $z_2$, $\alpha$ the coefficient of the power law, j a measurement beam from said LiDAR sensor (2), $m_{j,x}$ the measurement on the measurement beam j at the distance x, $v_{j,x}$ the longitudinal component of the wind speed for the measurement beam j, $v_{j,y}$ the transverse component of the wind speed for the measurement beam j, $v_{j,z}$ the vertical component of the wind speed for the measurement beam j, $a_j$, $b_j$, $c_j$ constant measurement coefficients for the measurement beam j, $\eta$ the noise of the state equation, $\epsilon_t$ the transverse noise, $\epsilon_v$ the vertical noise, $\epsilon_l$ the longitudinal noise, $\epsilon_m$ the measurement noise, $A_s$ is a constant matrix which is the function of self-correlation of the wind speed obtained by a Kaimal spectrum.

6. Method according to one of the preceding claims, wherein said wind speed is determined at different points by implementing the following equations:

$$\begin{cases} \hat{w}(k|k-1) = A_s \hat{w}(k-1|k-1) \\ P(k|k-1) = A_s P(k-1|k-1) A_s^T + Q \end{cases}$$

and

$$
\begin{cases}
K(k) &= P(k|k-1)C_a^T \left(C_a P(k|k-1)C_a^T + R\right)^{-1} \\
\hat{w}(k|k) &= \hat{w}(k|k-1) + K(k)\left(y(k) - C_a\hat{w}(k|k-1)\right) \\
P(k|k) &= \left(I - K(k)C_a\right)P(k|k-1)
\end{cases}
$$

with k the discrete time, $\omega$ a vector which first of all comprises the longitudinal components of the wind speed at n predefined estimation points, $\hat{w}(k|k$ - 1) is the estimation of the vector $\omega$(k) given the measurements performed up to the time k-1, $\hat{w}(k|k)$ is the vector estimation $\omega$(k) given the measurements performed up to the time k, $P(k|k$ - 1) is the covariance matrix of the vector $\omega$(k) given the measurements performed up to the time k-1, $P(k|k)$ is the covariance matrix of the vector $\omega$(k) given the measurements performed up to the time k, $A_s$ is a constant matrix which is the function of self-correlation of the wind speed obtained by the Kaimal spectrum, Q and R the covariance matrices of noises $\varepsilon$(k) and $\eta$(k), $C_a$ is obtained by linearizing the output equations around $\hat{\omega}(k|k$ - 1), y(k) the measurements of said LiDAR sensor (2), I the identity matrix.

7. Method according to one of the preceding claims, wherein said wind speed is determined in said vertical plane at a distance from said wind turbine by the average of the longitudinal components of the wind speed of the points belonging to said vertical plane, said wind speeds considered being those included in a projection of the surface swept by the rotor of the wind turbine in said vertical plane considered.

8. Method for controlling a wind turbine (1), **characterized in that** the following steps are implemented:

    a. said average wind speed is determined by means of the method according to one of the preceding claims;
    b. said wind turbine (1) is controlled as a function of said average wind speed.

9. LiDAR sensor (2), **characterized in that** it comprises a processing unit implementing a method according to one of Claims 1 to 8.

10. Wind turbine (1), **characterized in that** it comprises a LiDAR sensor (2) according to Claim 9, said LiDAR sensor (2) being preferably placed on the nacelle of said wind turbine or in the nose of the wind turbine.

11. Computer program product, **characterized in that** it comprises code instructions which cause the wind turbine according to Claim 10 to implement the steps of a method according to one of Claims 1 to 8, when the program is run on the processing unit of said wind turbine (1).

[Fig 1]

[Fig 2]

[Fig 3]

[Fig 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3013777
- US 2015145253 A
- FR 3068139
- US 20200124026 A
- FR 3088971
- US 20200166650 A
- EP 2581761 A
- US 2020301020 A
- FR 1906569
- FR 2976630 A1
- US 20120321463 A

**Littérature non-brevet citée dans la description**

- **P. TOWERS et al.** Real-time wind field reconstruction from LIDAR measurements using a dynamic wind model and state estimation : LIDAR wind field estimation. *Wind Energy,* 21 Novembre 2014, vol. 19 (1), 133-150